# EUROPÄISCHE PATENTANMELDUNG

(11) **EP 2 317 290 A2**
(43) Veröffentlichungstag der Anmeldung: **04.05.2011**
(21) Anmeldenummer: 10188744.6
(22) Anmeldetag: 25.10.2010
(51) Int. Cl.: G01K 7/42, G01K 7/16, G01K 7/34

(54) **Warmwasserversorgungseinrichtung, Regeleinrichtung, Vorrichtung und Verfahren zur Temperaturprofilmessung eines Mediums in einem Speicher**

(30) Priorität: 29.10.2009 DE 102009051304
(71) Anmelder: Robert Bosch GmbH, 70442 Stuttgart (DE)
(72) Erfinder: Klink, Simon, 71063, Sindelfingen (DE)

(57) **Zusammenfassung**

Die Erfindung betrifft ein Verfahren und eine Vorrichtung (10) zur Temperaturprofilerfassung eines fluiden Mediums (M) in einem Speicher (2). Zudem betrifft die Erfindung eine Regelvorrichtung für eine Warmwassereinrichtung und eine Warmwassereinrichtung.

Es ist eine Aufgabe der Erfindung, mittels einfacher Mittel eine Temperaturverteilung eines fluiden Mediums mit flexibler Auflösung über eine Speicherhöhe zu messen. Insbesondere ist es eine Aufgabe, ein Verfahren, eine Vorrichtung, eine Regelvorrichtung und eine Warmwasserversorgungseinrichtung zu schaffen, bei denen eine Temperaturprofilmessung leicht an beliebigen Stellen und ohne aufwendige Verstellung der Temperatursensoren realisierbar ist.

Gekennzeichnet sind das Verfahren, die Vorrichtung, die Regeleinrichtung und die Warmwasserversorungseinrichtung dadurch, dass mindestens eine Impedanz (Z) mindestens eines sich in Höhenrichtung (h) des Speichers (1) zumindest teilweise erstreckenden Sensors (2) erfasst wird und anhand der Impedanz (Z) eine Temperatur (T) zu einer entsprechenden Höhe (h) des Speichers (1) zugeordnet wird, sodass ein Temperaturprofil (T(h)) über die Höhe (h) erfasst wird, wobei der Sensor (2) als mindestens ein sich in Höhenrichtung (h) des Speichers (1) zumindest teilweise erstreckender Wechselstromwiderstand ausgebildet ist.

## Beschreibung

Die Erfindung betrifft ein Verfahren zur Temperaturprofilerfassung eines fluiden Mediums in einem Speicher, bei dem über mindestens einen Sensor die Temperatur des Mediums erfasst wird, nach dem Oberbegriff des Patentanspruches 1.

Weiter betrifft die Erfindung eine Vorrichtung zur Temperaturprofilerfassung eines Mediums in einem Speicher nach dem Oberbegriff des Anspruchs 3.

Zudem betrifft die Erfindung eine Regelvorrichtung für eine Warmwassereinrichtung nach dem Oberbegriff des Anspruchs 8.

Nicht zuletzt betrifft die Erfindung eine Warmwasserversorgungseinrichtung zur Bereitstellung von warmem Wasser nach dem Oberbegriff des Anspruchs 9.

Aus dem allgemeinen Stand der Technik sind Lösungen bekannt, bei denen eine Temperaturmessung eine Wärmemediums in einem Wärmespeicher, wie beispielsweise einem Puffer- oder Trinkwarmwasserspeicher, mittels einer endlichen Anzahl von an diskreten Stellen angebrachten Temperatursensoren erfolgt, wobei die Messwerte der Temperatursensoren einzeln erfasst werden. Die Sensoren werden bei der Installation an festgelegten Stellen angeordnet und sind nachträglich nicht oder nur mit hohem Aufwand an anderen Stellen anzuordnen.

Der Erfindung liegt die Aufgabe zugrunde, mittels einfacher Mittel eine Temperaturverteilung eines fluiden Mediums mit flexibler Auflösung über eine Speicherhöhe zu messen. Insbesondere ist es eine Aufgabe, ein Verfahren, eine Vorrichtung, eine Regelvorrichtung und eine Warmwasserversorgungseinrichtung zu schaffen, bei denen eine Temperaturprofilmessung leicht an beliebigen Stellen und ohne aufwendige Verstellung der Temperatursensoren realisierbar ist.

Erfindungsgemäß wird dies durch die Gegenstände mit den Merkmalen des Patentanspruches 1, des Patentanspruchs 3, des Patentanspruchs 8 und des Patentanspruchs 9 gelöst. Vorteilhafte Weiterbildungen sind den Unteransprüchen zu entnehmen.

Das erfindungsgemäße Verfahren zur Temperaturprofilerfassung eines fluiden Mediums in einem Speicher, bei dem über mindestens einen Sensor die Temperatur des Mediums erfasst wird, ist **dadurch gekennzeichnet, dass** mindestens eine Impedanz mindestens eines sich in Höhenrichtung des Speichers zumindest teilweise erstreckenden Sensors erfasst wird und anhand der Impedanz eine Temperatur zu einer entsprechenden Höhe des Speichers zugeordnet wird, sodass ein Temperaturprofil über die Höhe erfasst wird.

In einer Ausführungsform des erfindungsgemäßen Verfahrens ist vorgesehen, dass eine frequenz- und/oder temperaturabhängige Impedanz erfasst wird.

Die erfindungsgemäße Vorrichtung zur Temperaturprofilerfassung eines Mediums in einem Speicher, mit mindestens einem Sensor, mit dem die Temperatur des Mediums erfasst wird, ist **dadurch gekennzeichnet, dass** der Sensor als mindestens ein sich in Höhenrichtung des Speichers zumindest teilweise erstreckender Wechselstromwiderstand ausgebildet ist.

In einer Ausführungsform der vorliegenden Erfindung ist vorgesehen, dass die Impedanz des Wechselstromwiderstands frequenz- und/oder temperaturabhängig ausgebildet ist.

In einer anderen Ausführungsform der vorliegenden Erfindung ist vorgesehen, dass der Wechselstromwiderstand als kontinuierlich sich in Höhenrichtung erstreckender Wechselstromwiderstand ausgebildet ist.

Alternativ dazu oder in Kombination, ist in einer vorteilhaften Ausführungsform der vorliegenden Erfindung vorgesehen, dass der Wechselstromwiderstand als diskret sich in Höhenrichtung erstreckender Wechselstromwiderstand ausgebildet ist.

Wiederum eine vorteilhafte Ausführungsform der vorliegenden Erfindung sieht vor, dass eine Recheneinheit vorgesehen ist, die aus einer Gruppe von bei unterschiedlichen Frequenzen gemessenen Impedanzen eine Zuordnung zwischen Temperaturen und unterschiedlichen Höhen vornimmt und/oder ausgibt.

Die erfindungsgemäße Regelvorrichtung für eine Warmwassereinrichtung mit einem Speicher, in dem ein Warmwasser mit unterschiedlichen Temperaturen gespeichert ist, ist **dadurch gekennzeichnet, dass** eine erfindungsgemäße Vorrichtung vorgesehen ist, um eine Regelung anhand eines erfassten Temperaturprofils durchzuführen. Die Regelvorrichtung weist neben der erfindungsgemäßen Vorrichtung beispielsweise auch eine Regeleinheit auf.

Die erfindungsgemäße Warmwasserversorgungseinrichtung zur Bereitstellung von warmem Wasser für sanitäre oder Heizzwecke ist **dadurch gekennzeichnet, dass** mindestens eine erfindungsgemäße Regelvorrichtung vorgesehen ist

Mit dem erfindungsgemäßen Verfahren, der erfindungsgemäßen Vorrichtung, der erfindungsgemäßen Regelvorrichtung und der Warmwasserversorgungseinrichtung werden insbesondere die folgenden Vorteile realisiert:
Mit der Erfindung ist eine beliebig kleine Auflösung einer Temperturverteilung eines fluiden Mediums über eine Speicherhöhe erfassbar und entsprechend weiterverarbeitbar. Eine Temperaturprofilmessung ist ohne nachträgliche Neuanordnung der Sensoren an beliebigen Stellen durchführbar. Für eine Temperaturprofilmessung ist im einfachsten Fall ein einziger Sensor ausreichend. Durch die einfache Temperaturmessung des Mediums in dem Speicher über die gesamte Speicherhöhe mit hoher Ortsauflösung ist eine effiziente, das heißt ökologisch und ökonomisch optimierte Regelung einer Warmwasserversorgungseinrichtung möglich. Mittels der erfindungsgemäßen Temperaturprofilerfassung ist der genaue Ladezustand des Speichers an eine Regeleinrichtung übergebbar. Aus den Daten der Messung ist eine optimale Strategie für eine Warmwasserbereitung und -versorgung ableitbar. Beispielsweise kann eine temperaturabhängige Menge warmen Wassers am Trinkwasserspeicher als Mindestmenge vorgegeben werden. Bei zum Beispiel 70°C wird das Trinkwasser in der Regel mit kaltem Wasser gemischt, sodass eine geringere Menge warmen Trinkwassers erforderlich ist, als beispielsweise bei 50°C. Durch diesen einbringbaren Zusammenhang muss eine angeschlossene Heizung weniger oft den Speicher nachladen. Auch in Verbindung mit solarer Wärmeunterstützung ergeben sich Vorteile, weil zur Prognose einer ausreichenden solaren Tagesversorgung auch die Temperaturverteilung im Speicher eine Rolle spielt. Auch bei Pufferspeichern ergeben sich Vorteile, wenn deren Beladung durch tageszeitabhängige Geräte erfolgt. Wird beispielsweise eine Wärmepume mit Zweitarifzähler eingesetzt, so lässt sich die optimale Beladung bei Nacht und ein eventuelles Zuheizen bei Tag besser regeln, wenn die Temperaturverteilung im Speicher dem Regler in Gänze bekannt ist. Wird beispielsweise ein Blockheizkraftwerk (BHKW) zum Erwärmen eingesetzt, so lässt sich dessen Betrieb durch die vorliegende Erfindung leichter in Tageszeiten verschieben, in denen die erzeugte elektrische Energie direkt im Gebäude verwendet wird und das BHKW dadurch wirtschaftlicher arbeitet. Ein anderes Beispiel ist eine Heizungsanlage mit einem Festbrennstoffkessel zur Scheitholzfeuerung und einem Pufferspeicher. Der Pufferspeicher muss die überschüssige Wärme, die nicht in das Heizungssystem des zu beheizenden Gebäudes eingeleitet wird, aufnehmen können. Kann er die Wärme aus Kapazitätsgründen nicht aufnehmen, weil er bereits vollständig beladen ist, so muss eine Notkühlung in Betrieb gehen, die überschüssige Wärme geht verloren. Ist der Ladezustand des Speichers bekannt, so kann eine solche Notkühlung vermieden werden. Ein weiterer Vorteil für den Benutzer der Vorrichtung besteht in der Ortskonstanz des Sensors. Bei einer Änderung der Nutzeranzahl oder des Nutzerverhaltens muss nicht mehr der Speichersensor verschoben werden, um die Anlage weiterhin im ökonomischen und ökologischen Optimum zu betreiben. Bei einer erfindungsgemäßen Ausführung entfällt diese Änderung. Auch für den Hersteller ergeben sich Vorteile: Die Position der Sensoren muss nicht optimiert oder abgestimmt werden. Des Weiteren besteht die Möglichkeit, unterschiedliche oder alle Speicher mit demselben Sensor auszurüsten, unabhängig von der Einbindung und dem Nutzer.

Die Zeichnungen stellen Ausführungsbeispiele der Erfindung dar und zeigen in den Figuren:
- Fig. 1: schematisch in einem Querschnitt einen Speicher mit einer erfindungsgemäßen Vorrichtung,
- Fig. 2: schematisch eine Darstellung eines Sensors als temperaturabhängiger Widerstandsdraht und
- Fig. 3: schematisch eine Darstellung eines diskretisierten Modells eines verteilten Sensors.

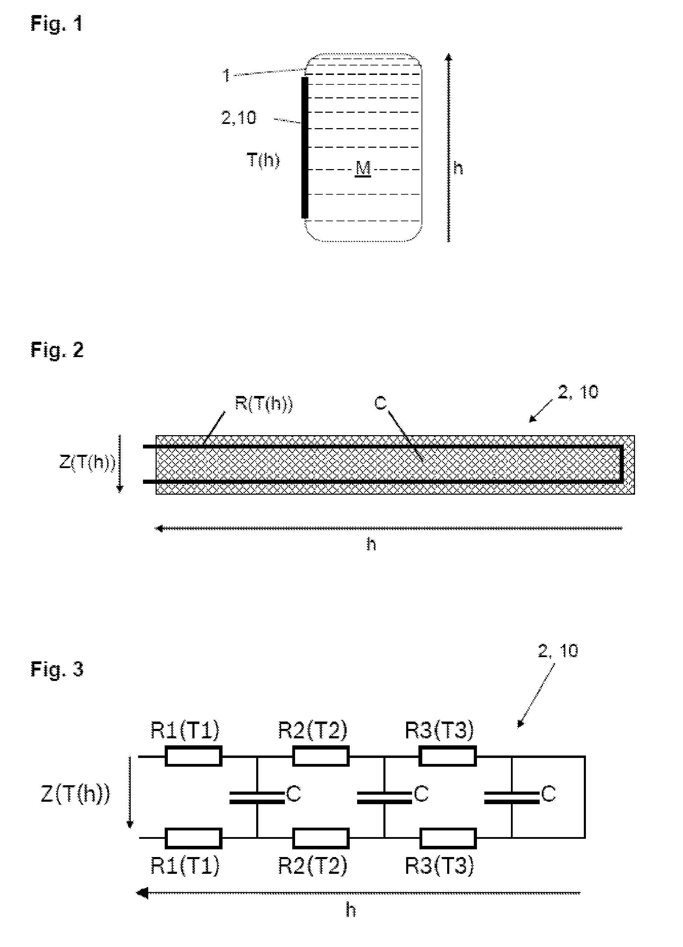

Fig. 1 zeigt schematisch in einem Querschnitt einen Speicher 1 mit einer erfindungsgemäßen Vorrichtung 10. Der Speicher 1 ist als Warmwasserspeicher ausgeführt, in dem ein Medium M, wie beispielsweise Wasser, angeordnet ist. In Fig. 1 ist der Speicher 1 über seine gesamte Höhe h mit Wasser gefüllt. Das Wasser weist über diese Höhe h unterschiedliche Temperaturen T auf. An der tiefsten Stelle des Speichers 1 ist das Wasser am kühlsten, an der höchsten Stelle entsprechend am wärmsten. Durch gestrichelte, horizontale Linien sind schematisch verschiedene Wasserschichten mit unterschiedlichen Temperaturen dargestellt. So ergibt sich aus den mit der Höhe variierenden Temperaturen ein Temperaturgradient T(h) über die Höhe h des Speichers 1. Die Vorrichtung 10 ist zur Temperaturprofilerfassung des Mediums M in dem Speicher 1 ausgebildet und umfasst hierfür einen Sensor 2, genauer einen Temperatursensor, mit dem die Temperatur T des Mediums M erfasst wird. Der Sensor 2 ist als ein sich in Höhenrichtung h des Speichers 1 erstreckender Wechselstromwiderstand ausgebildet. Dieser ist an einer Wandung des Speichers 1 angeordnet und steht mit dem Medium M in direktem oder indirektem Kontakt (Anbringung des Sensors an Speicherinnenfläche oder Speicheraußenfläche). Zur Temperaturprofilerfassung des Mediums M in dem Speicher 1 über den Sensor 2 wird eine Impedanz Z des Sensors 2 erfasst. Anhand der Impedanz Z des Sensors 2 wird eine Temperatur T zu einer entsprechenden oder korrespondierenden Höhe h des Speichers 1 zugeordnet, sodass das Temperaturprofil T(h) über die Höhe h erfasst wird. In Fig. 2 ist eine mögliche Ausführungsform des Sensors 2 dargestellt.

Fig. 2 zeigt schematisch eine Darstellung des Sensors 2 als temperaturabhängiger Widerstandsdraht. Aus Platzgründen ist der Sensor um 90° gedreht gegenüber seiner Anbringungung in dem Speicher 1 nach Fig. 1 dargestellt. Zur Kennzeichnung der Höhenrichtung h ist diese von rechts nach links verlaufend mittels eines Pfeils unterhalb des Sensors 2 dargestellt. Der Sensor 2 ist als temperaturabhängiger Widerstandsdraht ausgebildet, der einen Widerstand R(T(h)) aufweist, das heißt einen Widerstand, der von der Temperatur T über die Höhe h abhängig ist. Der Widerstandsdraht ist in ein als Kapazität C wirkendes Dielektrikum eingebettet oder eingegossen. Die Impedanz Z(T(h)) an den freien Enden hängt von dem Temperaturverlauf T(h) über der Speicherhöhe h ab. Misst man die Impedanz in mehreren Messdurchgängen bei unterschiedlichen Frequenzen, lässt sich die Temperaturverteilung über der Speicherhöhe berechnen.

Fig. 3 zeigt schematisch eine Darstellung eines diskretisierten Modells eines verteilten Sensors 2. Der Sensor umfasst eine Drahtschlaufe in der mehrere temperaturabhängige Widerstände R1(T1), R2(T2), R3(T3) in Reihe hintereinander geschaltet sind. Dabei sind die Widerstände doppelt vorhanden, wobei der erste und der letzte Widerstand R1(T1), der zweite und der vorletzte Widerstand R2(T2) und die beiden mittleren Widerstände R3(T3) gleich ausgebildet sind. Jeweils parallel zu jedem Widerstandpaars R1(T1) - R1(T1), R2(T2) - R2(T2), R3(T3) - R3(T3) ist eine Kapazität geschaltet. Wie schon zu Fig. 2 beschrieben, hängt die Impedanz Z(T(h)) an den freien Enden von dem Temperaturverlauf T(h) über der Speicherhöhe ab. Im Folgenden wird die Funktionsweise der Vorrichtung beschrieben.

Die Messung der Temperatur T über der Speicherhöhe h findet durch Messung von frequenz- und temperaturabhängigen Impedanzen Z statt. Diese Impedanzen werden über die gesamte Speicherhöhe h verteilt erfasst. Hierzu sind entsprechende Sensoren 2 vorgesehen. Im Fall von verteilten Sensoren 2 und der Verwendung eines temperaturabhängigen ohmschen Widerstandes R in Kombination mit einem kapazitiven (rein imaginären) Widerstand C können der ohmsche Widerstand R in Reihe entlang der Speicherhöhe h und die Kapazität C parallel dazu geschaltet werden (Fig. 2). Die Impedanz Z(T(h)) des Aufbaus zwischen den freien Drahtenden hängt nun vom Temperaturverlauf T(h) über der Speicherhöhe h ab. Durch mehrere Leitfähigkeitsmessungen bei unterschiedlichen Frequenzen lässt sich dann der Temperaturverlauf T über der Speicherhöhe h berechnen. Fig. 3 zeigt ein diskretisiertes Modell des Sensors 2, anhand dessen die Funktionsweise im Folgenden beschrieben wird. Bei Anlegen einer Gleichspannung an die Drahtenden laden sich die Kondensatoren C auf, wobei ihr Strom aber gegen Null konvergiert, sodass nach kurzer Zeit nur durch den temperaturabhängigen Widerstandsdraht R(T) ein Strom fließen kann. Es besteht also keine Phasenverschiebung zwischen angelegter Spannung und dem fließenden Strom. Die Stromstärke hängt nur von der Summe der Einzelwiderstände R1, R2, R3 ab. Bei einem linearen Zusammenhang zwischen Temperatur T und spezifischem Widerstand kann durch diese Messung direkt auf die Durchschnittstemperatur im Speicher 1 und damit auf den Energieinhalt im Speicher 1 geschlossen werden. Wird eine Wechselspannung sehr hoher Frequenz angeschlossen, so ist die Impedanz Z der Kondensatoren C vernachlässigbar klein. In diesem Fall fließt der Strom jeweils nur durch die beiden Widerstände R1 und den obersten Kondensator. Dadurch kann die Temperatur T im oberen Speicherteil bestimmt werden. Bei mittleren Frequenzen ergibt sich ein Stromprofil, bei welchem die oberen Widerstände stärker bestromt werden als die unteren. Je niedriger die Frequenz, desto gleichmäßiger der Stromfluss durch alle Widerstände. Durch Messung bei mehreren Frequenzen ergeben sich entsprechend viele Bedingungen, aus denen sich die einzelnen Widerstände und daraus die Temperaturen T berechnen lassen. Je mehr Frequenzen ausgewertet werden, desto mehr Teile kann das diskrete Modell enthalten, um noch alle Temperaturen T bestimmen zu können. Werden zehn Frequenzen (f=0 eingeschlossen) ausgewertet, so kann das Modell zehn Widerstände R1...R10 enthalten, deren Bestimmung zu einem gemessenen Temperaturprofil T(h) führt, welches in zehn Bereiche eingeteilt ist. Je mehr Frequenzen ausgewertet werden, desto höher die Ortsauflösung bei der Temperaturprofilmessung. Die Funktionsweise des Sensors 2 ist nicht notwendigerweise auf die Verwendung von temperaturabhängigem Widerstandsdraht in Verbindung mit einer Kapazität beschränkt. Die Impedanz Z muss lediglich auf eineindeutige Weise von der Temperatur T und der Frequenz abhängen. Anstatt der Kapazität ist beispielsweise auch eine Induktivität denkbar. Alternativ zum verteilten Sensor 2 kann auch direkt eine Verschaltung diskreter Elemente erfolgen. Die Ortsauflösung ist dann aber auf die Anzahl der verwendeten Elemente beschränkt.

## Patentansprüche

1. Verfahren zur Temperaturprofilerfassung eines Mediums (M) in einem Speicher (1), bei dem über mindestens einen Sensor (2) die Temperatur (T) des Mediums (M) erfasst wird, **dadurch gekennzeichnet, dass** mindestens eine Impedanz (Z) mindestens eines sich in Höhenrichtung (h) des Speichers (1) zumindest teilweise erstreckenden Sensors (2) erfasst wird und anhand der Impedanz (Z) eine Temperatur (T) zu einer entsprechenden Höhe (h) des Speichers (1) zugeordnet wird, sodass ein Temperaturprofil (T(h)) über die Höhe (h) erfasst wird.

2. Verfahren nach Anspruch 1,
**dadurch gekennzeichnet, dass** eine frequenz- und/oder temperaturabhängige Impedanz (Z) erfasst wird.

3. Vorrichtung (10) zur Temperaturprofilerfassung eines Mediums (M) in einem Speicher (1), mit mindestens einem Sensor (2), mit dem die Temperatur (T) des Mediums (M) erfasst wird,
**dadurch gekennzeichnet, dass** der Sensor (2) als mindestens ein sich in Höhenrichtung (h) des Speichers (1) zumindest teilweise erstreckender Wechselstromwiderstand ausgebildet ist.

4. Vorrichtung (10) nach Anspruch 3,
**dadurch gekennzeichnet, dass** die Impedanz (Z) des Wechselstromwiderstands frequenz-und/oder temperaturabhängig (Z(f), Z(T)) ausgebildet ist.

5. Vorrichtung (10) nach Anspruch 3 oder 4,
**dadurch gekennzeichnet, dass** der Wechselstromwiderstand als kontinuierlich sich in Höhenrichtung (h) erstreckender Wechselstromwiderstand ausgebildet ist.

6. Vorrichtung (10) nach Anspruch 3 oder 4,
**dadurch gekennzeichnet, dass** der Wechselstromwiderstand als diskret sich in Höhenrichtung (h) erstreckender Wechselstromwiderstand ausgebildet ist.

7. Vorrichtung (10) nach einem der vorherigen Ansprüche 3 bis 6,
**dadurch gekennzeichnet, dass** eine Recheneinheit vorgesehen ist, die aus einer Gruppe von bei unterschiedlichen Frequenzen (f) gemessenen Impedanzen (Z(T, f)) eine Zuordnung zwischen Temperaturen (T) und unterschiedlichen Höhen (h) vornimmt und/oder ausgibt.

8. Regelvorrichtung für eine Warmwassereinrichtung mit einem Speicher (1), in dem ein Warmwasser mit unterschiedlichen Temperaturen (T) gespeichert ist,
**dadurch gekennzeichnet, dass** eine Vorrichtung (10) nach einem der vorherigen Ansprüche 3 bis 7 vorgesehen ist, um eine Regelung anhand eines erfassten Temperaturprofils (T(h)) durchzuführen.

9. Warmwasserversorgungseinrichtung zur Bereitstellung von Warmwasser,
**dadurch gekennzeichnet, dass** mindestens eine Regelvorrichtung nach Anspruch 8 vorgesehen ist.
